# EUROPÄISCHE PATENTSCHRIFT

(11) **EP 1 955 829 B1**
(45) Veröffentlichungstag und Bekanntmachung des Hinweises auf die Patenterteilung: **13.01.2010**
(21) Anmeldenummer: 07002826.1
(22) Anmeldetag: 09.02.2007
(51) Int. Cl.: B25J 9/16

(54) **Verfahren zur Bearbeitung eines Gegenstands, eines Systems oder einer Einrichtung und zugehörige Bearbeitungsvorrichtung**
Method for processing an object, a system or an appliance and the corresponding processing device
Procédé de traitement d'un objet, d'un système ou d'un dispositif et dispositif de traitement associé

(43) Veröffentlichungstag der Anmeldung: 13.08.2008
(73) Patentinhaber: SIEMENS AKTIENGESELLSCHAFT, 80333 München (DE)
(72) Erfinder: Schneider, Frank, 90480 Nürnberg (DE)

(56) Entgegenhaltungen:
- EP-A- 0 911 126
- EP-A- 0 950 888
- DE-A1-102004 008 904

## Beschreibung

Die Erfindung betrifft ein Verfahren zur Bearbeitung eines Gegenstands, eines Systems oder einer Einrichtung an unterschiedlichen Bearbeitungsstellen, an denen mit vorgegebenen Arbeitsmitteln den Bearbeitungsstellen jeweils zugeordnete Bearbeitungsprozesse durchgeführt werden. Ein Verfahren entsprechend dem Oberbegriff des Anspruchs 1 ist aus EP 0 950 888 A2 bekannt.

Weiterhin betrifft die Erfindung eine Vorrichtung zur Bearbeitung eines Gegenstands, eines Systems oder einer Einrichtung an unterschiedlichen Bearbeitungsstellen, denen jeweils Bearbeitungsprozesse mit vorgegebenen Arbeitsmitteln zugeordnet sind.

Bei bisherigen Bearbeitungsvorrichtungen ist es zur Sicherstellung der Prozesssicherheit in Arbeitsprozessen notwendig, Arbeitsmittel koordinatengeführt zu überwachen. Die Arbeitsmittel werden über technische Einrichtungen, z.B. über mehrere lineare Messwertgeber und Winkelkodierer wiederholgenau Positionen im Raum zugeführt. Das bedeutet, dass in einer vorher definierten Zuordnung bestimmten Positionen im Raum, in einer Ebene oder einer Richtung festgelegte Arbeitsprozesse mit festgelegten Arbeitsmitteln und festgelegten Arbeitsparametern zugeordnet sind. Über diese Positionen ist neben der Freischaltung des Prozesses auch die qualitätsrelevante Dokumentation, d.h. zum Beispiel das Ergebnis des Arbeitsprozesses möglich. In nachgeschalteten Prozessen ist so ein Zugriff auf die Positionen und hinterlegten Ergebnisse möglich und so z.B. eine positionsgebundene Nacharbeit.

Der Erfindung liegt die Aufgabe zugrunde, ein Verfahren und eine Vorrichtung der oben genannten Art dahingehend zu verbessern, dass neben einer einfachen Positionierhilfe auf einfache Weise Information über die jeweilige Bearbeitung zur Verfügung gestellt wird.

Die erste Aufgabe wird dadurch gelöst, dass die bearbeitungsrelevante Information durch Pulsen des Lichstrahls übertragen wird, der von einer Optik empfangen wird, anschließend ausgewertet wird, und dass danach die bearbeitungsrelevante Information angezeigt wird.

Die zweite Aufgabe wird dadurch gelöst, dass die Vorrichtung mindestens eine Optik zum Empfang des von der Lichtquelle ausgesendeten Lichtstrahls sowie eine Auswerteeinheit zur Auswertung des empfangenen Lichtstrahls hinsichtlich bearbeitungsrelevanter Informationen aufweist, und dass die Lichtquelle zur Aussendung eines gepulsten Lichtstrahls steverbar ist.

Da die Farbe des Lichtstrahls einfach veränderbar ist, dient gemäß Anspruch 2 die Farbe des Lichtstrahls vorteilhafterweise als bearbeitungsrelevante Information.

Ein weiterer Vorteil ist es, wenn gemäß Anspruch 3 die bearbeitungsrelevante Information das für die jeweilige Bearbeitungsstelle zu verwendende Arbeitsmittel und/oder den zugeordneten Bearbeitungsprozess umfasst. Denn auf diese Weise wird mit nur einem Mittel, nämlich dem Lichtstrahl sowohl die Information über den Ort der Bearbeitung als auch die bei dem Bearbeitungsprozess durchzuführenden Handlungen gegeben.

Vorteilhafte Weiterbildungen der Vorrichtung sind den Unteransprüchen 6 bis 10 zu entnehmen.

Ein Ausführungsbeispiel der Erfindung wird im Folgenden anhand einer Zeichnung näher erläutert. Es zeigen:
- FIG 1: eine erfindungsgemäße Vorrichtung zur Bearbeitung eines Gegenstands, eines Systems oder einer Einrichtung und
- FIG 2: die wesentlichen Verfahrensschritte eines erfindungsgemäßen Verfahrens zur Bearbeitung.

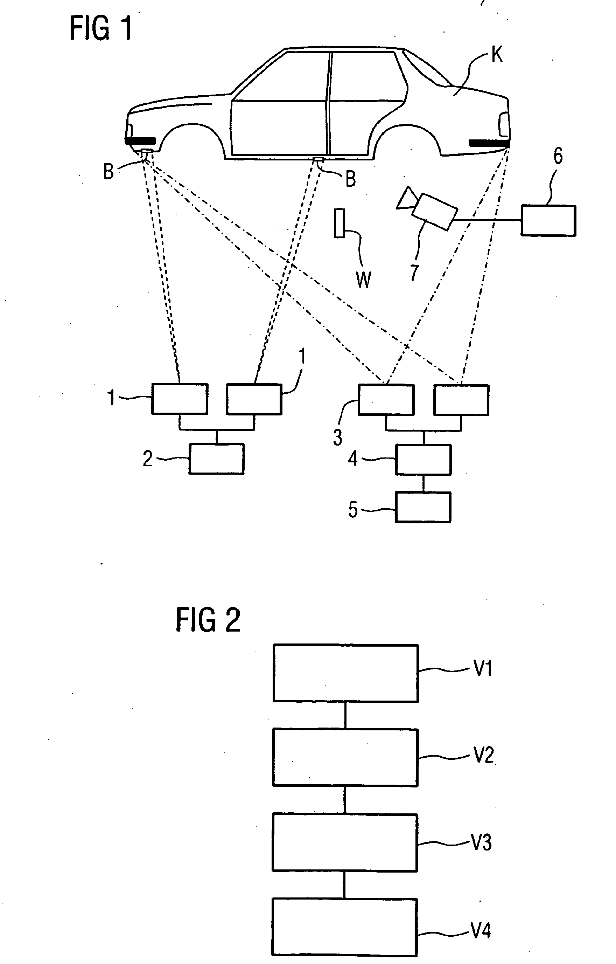

In FIG 1 ist eine Vorrichtung zur Bearbeitung eines Gegenstands, eines Systems oder einer Einrichtung K an unterschiedlichen Bearbeitungsstellen B dargestellt, denen jeweils Bearbeitungsprozesse mit vorgegebenen Arbeitsmitteln W zugeordnet sind. Der Gegenstand kann z.B. ein Kraftfahrzeug oder eine Kraftfahrzeugkomponente wie die hier in FIG 1 dargestellte Karosse K sein, die mehrere Bearbeitungsstellen B aufweist. Im vorliegenden Ausführungsbeispiel ist ein Schrauber W als Arbeitsmittel eingesetzt. Die erfindungsgemäße Vorrichtung umfasst im vorliegenden Ausführungsbeispiel zwei Lichtquellen 1, die zur Markierung der jeweiligen Bearbeitungsstelle B dienen, sowie eine Steuereinrichtung 2, die die Lichtquellen 1 gemäß abgespeicherten für die jeweilige Bearbeitungsstelle B bearbeitungsrelevanten Information steuert. Der Lichtstrahl ist dabei Informationsträger der der jeweiligen Bearbeitungsstelle B zugeordneten bearbeitungsrelevanten Information. Weiterhin umfasst die Vorrichtung zwei Optiken 3 zum Empfang der von den Lichtquellen 1 ausgesendeten Lichtstrahlen sowie eine Auswerteeinheit 4, die zur Auswertung der empfangenen Lichtstrahlen hinsichtlich bearbeitungsrelevanter Informationen dient. Der Auswerteeinheit 4 ist ein Bildschirm 5 zur Anzeige der bearbeitungsrelevanten Information nachgeschaltet. Es werden vorzugsweise Lichtquellen 1 eingesetzt, deren ausgesendete Lichtstrahlen in der Farbe veränderbar sind. Die Farbe des Lichtstrahls kann als bearbeitungsrelevante Information genutzt werden und dem Werker auf einfache Weise z.B. einen Schrauber W als zu verwendendes Arbeitsmittel anzeigen. Zusätzlich wird die bearbeitungsrelevante Information, z.B. der Bearbeitungsprozess oder wichtige Bearbeitungsparameter durch Pulsen des Lichtstrahls abgespeichert und übertragen. Hierzu wird die jeweilige Lichtquelle 1 durch die Steuereinrichtung 2 entsprechend angesteuert. Gegebenenfalls ist eine Kamera 6 zur Aufnahme der Bearbeitungsstelle nach deren Bearbeitung vorgesehen. Die Bilddaten des von der Kamera 6 aufgenommenen Bildes für die jeweilige Bearbeitungsstelle B werden in einer Einheit 7 mit Soll-Bilddaten verglichen.

Um eine automatisierte Bearbeitung durchzuführen, wird ein Roboter eingesetzt, der Träger der Optik 3 und der Auswerteeinrichtung 4 ist. Er bearbeitet die jeweils durch einen Lichtstrahl markierte Bearbeitungsstelle B gemäß der dafür bearbeitungsrelevanten Information mit einem der vorgegebenen Arbeitsmittel W. Der Roboter kann noch zusätzlich mit der Kamera 6 und der Einrichtung 7 ausgestattet sein, um die korrekte Bearbeitung in oben beschriebener Weise zu überprüfen.

Eine besondere Alternative kann darin bestehen, dass die Lichtquelle 1 und/oder die Auswerteeinheit 4 im Boden versenkt ist.

Das erfindungsgemäße Verfahren zur Bearbeitung eines Gegenstands, eines Systems oder einer Einrichtung K an unterschiedlichen Bearbeitungsstellen W ist mit seinen wesentlichen Schritten in FIG 2 dargestellt. Im ersten Schritt V1 wird die jeweilige Bearbeitungsstelle B durch einen Lichtstrahl markiert, der als Informationsträger bzw. Datenspeicher einer bearbeitungsrelevanten Information dient. Die bearbeitungsrelevante Information wird durch Pulsen des Lichtstrahls und eventuell durch die Farbe des Lichtstrahls gespeichert und übertragen werden. Im zweiten Schritt V2 wird der Lichtstrahl von einer Optik 3 empfangen. Nach Auswertung des Lichtstrahls hinsichtlich der bearbeitungsrelevanten Information im folgenden Schritt V3 wird diese im folgenden Schritt 4 angezeigt. Somit liegen einem für die Bearbeitung zuständigen Werker auf besonders einfache Weise alle Informationen vor, nämlich neben der Positionserkennung der Bearbeitungsstelle auch die für den Bearbeitungsprozess erforderlichen Angaben, z.B. das Arbeitsmittel und ggf. weitere Arbeitsparameter.

## Patentansprüche

1. Verfahren zur Bearbeitung eines Gegenstands, eines Systems oder einer Einrichtung an unterschiedlichen Bearbeitungsstellen, an denen mit vorgegebenen Arbeitsmitteln den Bearbeitungsstellen jeweils zugeordnete Bearbeitungsprozesse durchgeführt werden, wobei die jeweilige Bearbeitungsstelle durch einen Lichtstrahl markiert wird, der als Informationsträger bzw. Datenspeicher einer bearbeitungsrelevanten Information dient,
**dadurch gekennzeichnet, dass** die bearbeitungsrelevante Information durch Pulsen des Lichtstrahls übertragen wird, der von einer Optik (3) empfangen wird, anschließend ausgewertet wird und dass danach die bearbeitungsrelevante Information angezeigt wird.

2. Verfahren nach Anspruch 1, **dadurch gekennzeichnet, dass** die Farbe des Lichtstrahls als bearbeitungsrelevante Information dient.

3. Verfahren nach einem der vorangehenden Ansprüche, **dadurch gekennzeichnet, dass** die bearbeitungsrelevante Information das für die jeweilige Bearbeitungsstelle zu verwendende Arbeitsmittel und/oder den zugeordneten Bearbeitungsprozess umfasst.

4. Verfahren nach einem der vorangehenden Ansprüche, **dadurch gekennzeichnet, dass** der Lichtstrahl von einer Lichtquelle ausgesendet wird, die von einer Steuereinrichtung gemäß den darin für die Bearbeitungsstellen abgespeicherten relevanten Daten angesteuert wird.

5. Vorrichtung zur Bearbeitung eines Gegenstands, eines Systems oder einer Einrichtung K an unterschiedlichen Bearbeitungsstellen, denen jeweils Bearbeitungsprozesse mit vorgegebenen Arbeitsmitteln zugeordnet sind, mit mindestens einer Lichtquelle (1), deren ausgesendeter Lichtstrahl zur Markierung der jeweiligen Bearbeitungsstelle dient, mit einer Steuereinrichtung (2), durch die die Lichtquelle (1) gemäß abgespeicherten, bearbeitungsrelevanten Informationen derart steuerbar ist, dass der Lichtstrahl Informationsträger der für die jeweilige Bearbeitungsstelle zugeordneten bearbeitungsrelevanten Information ist, **dadurch gekennzeichnet, dass** die Vorrichtung zusätzlich mindestens eine Optik (3) zum Empfang des von der Lichtquelle (1) ausgesendeten Lichtstrahls und eine Auswerteeinheit (4) zur Auswertung des empfangenen Lichtstrahls hinsichtlich bearbeitungsrelevanter Information aufweist, und dass die Lichtquelle (1) zur Aussendung eines gepulsten Lichtstrahls steuerbar ist.

6. Vorrichtung nach Anspruch 5, **dadurch gekennzeichnet, dass** Mittel (5) zur Anzeige der bearbeitungsrelevanten Information vorgesehen ist.

7. Vorrichtung nach Anspruch 5 oder 6, **dadurch gekennzeichnet, dass** die Farbe des Lichtstrahls veränderbar ist.

8. Vorrichtung nach einem der vorangehenden Ansprüche 5 bis 7, **dadurch gekennzeichnet, dass** ein Roboter vorgesehen ist, der Träger der Optik (3) und der Auswerteeinrichtung (4) ist und der zur Bearbeitung der jeweils markierten Bearbeitungsstelle gemäß der dafür bearbeitungsrelevanten Information mit einem der vorgegebenen Arbeitsmittel dient.

9. Vorrichtung nach Anspruch 8, **dadurch gekennzeichnet, dass** der Roboter mit einer Kamera (6) zur Aufnahme der Bearbeitungsstelle nach deren Bearbeitung dient.

10. Vorrichtung nach Anspruch 9, **gekennzeichnet durch** eine Einrichtung (7), die zum Vergleich von Bilddaten des aufgenommenen Bildes für die jeweilige Bearbeitungsstelle mit abgespeicherten Soll-Bilddaten dient.

## Claims

1. Method for processing an object, a system or an appliance at different processing locations at which processing procedures respectively assigned to the processing locations are carried out with the aid of prescribed working means, the respective processing location being marked by a light beam which serves as information medium or data memory for information relevant to processing, **characterized in that** the information relevant to processing is transmitted by pulses of the light beam which is received by an optics (3) and subsequently evaluated, and **in that** the information relevant to processing is subsequently displayed.

2. Method according to Claim 1, **characterized in that** the colour of the light beam serves as information relevant to processing.

3. Method according to one of the preceding claims, **characterized in that** the information relevant to processing comprises the working means to be used for the respective processing location, and/or the assigned processing procedure.

4. Method according to one of the preceding claims, **characterized in that** the light beam is emitted by a light source which is driven by a control device in accordance with the relevant data stored therein for the processing locations.

5. Apparatus for processing an object, a system or an appliance K at different locations which are respectively assigned processing procedures with prescribed working means, having at least one light source (1) whose emitted light beam serves to mark the respective processing location, and having a control device (2) which can be used to control the light source (1) in accordance with stored information relevant to processing in such a way that the light beam is an information medium of the information which is assigned for the respective processing location and is relevant to processing, **characterized in that** the apparatus additionally has at least one optics (3) for receiving the light beam emitted by the light source (1), and an evaluation unit (4) for evaluating the received light beam with regard to the information relevant to processing, and **in that** the light source (1) can be controlled to emit a pulsed light beam.

6. Apparatus according to Claim 5, **characterized in that** a means (5) is provided for displaying the information relevant to processing.

7. Apparatus according to Claim 5 or 6, **characterized in that** the colour of the light beam is variable.

8. Apparatus according to one of the preceding Claims 5 to 7, **characterized in that** a robot is provided which is the support for the optics (3) and the evaluation device (4), and which serves to process the respectively marked processing location in accordance with the information relevant to processing for this purpose with the aid of one of the prescribed working means.

9. Apparatus according to Claim 8, **characterized in that** the robot serves to record the processing location with a camera (6) after it has been processed.

10. Apparatus according to Claim 9, **characterized by** a device (7) which serves to compare image data of the recorded image for the respective processing location with stored desired image data.

## Revendications

1. Procédé de traitement d'un objet, d'un système ou d'un dispositif en des points de traitements différents sur lesquels on effectue par des moyens de travail prescrits des opérations de traitement associées respectivement aux points de traitement, les points de traitement respectifs étant repérés par un faisceau lumineux qui sert de support d'information ou de mémoire de données d'une information pertinente pour le traitement,
**caractérisé en ce que** l'on transmet l'information pertinente pour le traitement par des impulsions du faisceau lumineux qui est reçu par une optique ( 3 ), qu'on l'exploite ensuite et qu'on affiche après l'information pertinente pour le traitement.

2. Procédé suivant la revendication 1, **caractérisé en ce que** l'on se sert de la couleur du faisceau lumineux comme information pertinente pour le traitement.

3. Procédé suivant l'une des revendications précédentes, **caractérisé en ce que** l'information pertinente pour le traitement comprend le moyen de travail utilisé aux points de traitement respectif et/ou l'opération de traitement associée.

4. Procédé suivant l'une des revendications précédentes, **caractérisé en ce que** l'on émet le faisceau lumineux par une source lumineuse qui est commandée par un dispositif de commande suivant les données pertinentes qui sont mémorisées pour les points de traitement.

5. Dispositif de traitement d'un objet, d'un système ou d'un dispositif K en des points de traitement différents auxquels sont associées respectivement des opérations de traitement par des moyens de travail prescrits, comprenant au moins une source ( 1 ) lumineuse dont le faisceau lumineux émis sert à repérer le point de traitement respectif, un dispositif ( 2 ) de commande par lequel la source ( 1 ) lumineuse peut être commandée suivant des informations mémorisées et pertinentes pour le traitement de façon à ce que le faisceau lumineux soit un support de l'information pertinente pour le traitement associé à chaque point de traitement, **caractérisé en ce que** le dispositif a en outre au moins une optique ( 3 ) de réception du faisceau lumineux émis par la source ( 1 ) lumineuse et une unité ( 4 ) d'exploitation pour exploiter le faisceau lumineux reçu du point de vue de l'information pertinente pour le traitement, et
**en ce que** la source ( 1 ) lumineuse peut être commandée pour émettre un faisceau lumineux pulsé.

6. Procédé suivant la revendication 5, **caractérisé en ce qu'**il est prévu des moyens ( 5 ) d'affichage de l'information pertinente pour le traitement.

7. Procédé suivant la revendication 5 ou 6, **caractérisé en ce que** la couleur du faisceau lumineux peut être modifiée.

8. Procédé suivant l'une des revendications précédentes 5 à 7, **caractérisé en ce qu'**il est prévu un robot qui est porteur de l'optique ( 3 ) et du dispositif ( 4 ) d'exploitation et qui sert au traitement du point de traitement repéré respectivement suivant l'information pertinente pour le traitement par l'un des moyens de travail prescrits.

9. Procédé suivant la revendication 8, **caractérisé en ce que** le robot sert avec un appareil photographique ( 6 ) à la prise de vue du point de traitement après son traitement.

10. Procédé suivant la revendication 9, **caractérisé par** un dispositif ( 7 ) qui sert à comparer des données d'images de l'image enregistrée pour le point de traitement respectif à des données d'images de consigne mémorisées.
